# EUROPÄISCHE PATENTSCHRIFT

(11) **EP 3 951 228 B1**
(45) Veröffentlichungstag und Bekanntmachung des Hinweises auf die Patenterteilung: **23.10.2024**
(21) Anmeldenummer: 21189135.3
(22) Anmeldetag: 02.08.2021
(51) Int. Cl.: F16L 11/20, F16L 13/02, F16L 11/15, F16L 33/01, F16L 33/26

(54) **SCHLAUCHBAUGRUPPE**
HOSE ASSEMBLY
MODULE DE TUYAU

(30) Priorität: 03.08.2020 DE 202020104470 U
(43) Veröffentlichungstag der Anmeldung: 09.02.2022
(73) Patentinhaber: Witzenmann GmbH, 75175 Pforzheim (DE)
(72) Erfinder: GEHRING, Matthias, 75334 Straubenhardt (DE); HARTMANN, Johannes, 75173 Pforzheim (DE); JANKE, Julian, 71735 Eberdingen-Nussdorf (DE); MASCHLANKA, Jörg, 76307 Karlsbad (DE); ROTHFUSS, Daniel, 75334 Straubenhardt (DE); MICHALIS, Theodoros, 75172 Pforzheim (DE)
(74) Vertreter: LBP Lemcke, Brommer & Partner Patentanwälte mbB

(56) Entgegenhaltungen:
- EP-B1- 2 327 914
- DE-U1- 20 212 169
- US-A- 6 106 027

## Beschreibung

Die Erfindung betrifft eine Schlauchbaugruppe, umfassend: einen Innenschlauch, einen Außenschlauch, der den Innenschlauch abschnittsweise umgibt, sodass wenigstens ein freies Ende des Innenschlauchs aus dem Außenschlauch herausragt; und eine Verbindungsordnung mit: wenigstens einem hülsenförmigen Innenteil, welches Innenteil in das freie Ende des Innenschlauchs eingeführt ist; und wenigstens einem hülsenförmigen Außenteil, welches Außenteil das Innenteil umgibt und mit dem Außenschlauch fluiddicht verbunden ist, vorzugsweise stoffschlüssig, höchst vorzugsweise verschweißt; bei der das freie Ende des Innenschlauchs zwischen dem Innenteil und dem Außenteil geklemmt ist und bei der das Außenteil mit einem umlaufenden Vorsprung gegenüber dem Innenteil hervorsteht, gemäß dem Oberbegriff des Anspruchs 1.

Eine ähnliche Schlauchbaugruppe ist aus der EP 2 327 914 B1 bekannt. Die vorbekannte Schlauchbaugruppe umfasst neben einem Innenschlauch und einem Außenschlauch noch eine Kopplungsanordnung mit einer ersten Klemmbefestigung und einer zweiten Klemmbefestigung. Die erste Klemmbefestigung ist mit der zweiten Klemmbefestigung verbunden, und ein erster Endabschnitt des Innenschlauchs ist zwischen der ersten Klemmbefestigung und der zweiten Klemmbefestigung befestigt, d.h. eingeklemmt. Des Weiteren ist bei dem vorbekannten Gegenstand die erste Klemmbefestigung mit der zweiten Klemmbefestigung durch Schweißen verbunden.

Bei einer solchen Ausgestaltung ist insbesondere als nachteilig anzusehen, dass die genannte Schweißverbindung nicht ohne Weiteres überprüfbar ist, beispielsweise auf Leckagen, da sie durch den regelmäßig aus Kunststoff bestehenden Innenschlauch (sog. Kunststoffliner) maskiert ist. Außerdem kommt es beim Verschweißen zu einer relativ großen thermischen Belastung des Innenschlauchs (des Kunststoffliners), sodass zwecks einer zerstörungsfreien Herstellung relativ große Baulängen erforderlich sind, was sich nachteilig auf den Bauraumbedarf auswirkt.

DE 202 12 169 U1 und US 6,106,027 A offenbaren jeweils gattungsgemäße Schlauchbaugruppen für Sanitäranwendungen.

Gemäß DE 202 12 169 U1 liegt bei einem Brauseschlauch ein sog. innerer Nippel mit einem Kragen endständig stirnseitig an einem Kragen eines sog. äußeren Nippels an. Umgeben ist die gesamte Anordnung von einer Überwurfmutter zum Anbinden (Anschrauben) an eine Handbrause oder eine Armatur.

Die US 6,106,027 A zeigt eine entsprechende Ausgestaltung.

Der Erfindung liegt die Aufgabe zugrunde, eine alternative Schlauchbaugruppe der weiter oben genannten Art anzugeben, bei der insbesondere eine umfassende Prüfbarkeit auf Dichtheit, beispielsweise mittels Helium-Lecktest, möglich ist. Außerdem soll die thermische Belastung reduziert und eine verkürzte Bauweise ermöglicht werden.

Die Erfindung löst diese Aufgaben durch eine Schlauchbaugruppe mit den Merkmalen des Anspruchs 1. Vorteilhafte Weiterbildungen der erfindungsgemäßen Schlauchbaugruppe sind Gegenstand von Unteransprüchen.

Eine erfindungsgemäße Schlauchbaugruppe umfasst: einen Innenschlauch; einen Außenschlauch, der den Innenschlauch abschnittweise umgibt, sodass wenigstens ein freies Ende des Innenschlauchs aus dem Außenschlauch herausragt; und eine Verbindungsanordnung mit: wenigstens einem hülsenförmigen Innenteil, welches Innenteil in das freie Ende des Innenschlauchs eingeführt ist; und wenigstens einem hülsenförmigen Außenteil, welches das Innenteil umgibt und mit dem Außenschlauch fluiddicht verbunden ist, vorzugsweise stoffschlüssig, höchst vorzugsweise verschweißt. Dabei ist erfindungsgemäß das freie Ende des Innenschlauchs zwischen dem Innenteil und dem Außenteil geklemmt, und das Außenteil steht mit einem umlaufenden Vorsprung endständig gegenüber dem Innenteil hervor.

Ein weiteres Merkmal der erfindungsgemäßen Schlauchbaugruppe sieht vor, dass diese ein zusätzliches Anschlussteil aufweist, das sich in einem verbundenen Zustand axial an das Innenteil anschließt, wobei das Außenteil in dem verbundenen Zustand mit seinem umlaufenden Vorsprung das Anschlussteil in einem Abschnitt umgibt.

Das Anschlussteil und das Außenteil sind im Bereich des Vorsprungs fluiddicht stoffschlüssig verbunden, höchst vorzugsweise verschweißt, insbesondere mittels einer Laserschweißnaht, welche Schweißnaht vorzugsweise vollumfänglich zwischen dem Außenteil im Bereich des genannten Vorsprungs und dem Anschlussteil ausgebildet ist.

Das genannte Anschlussteil kann als kundenseitiges Anschlussteil zum Verbinden der restlichen Schlauchbaugruppe mit weiteren Bestandteilen einer Leitungsanordnung dienen, wie bereits erwähnt. Aufgrund des umlaufenden Vorsprungs ist erfindungsgemäß weiterhin vorgesehen, wie schon erwähnt, das Anschlussteil mit dem Außenteil stoffschlüssig, beispielsweise mittels einer Laserschweißnaht, zu verbinden, ohne dass eine zusätzliche stoffschlüssige Verbindung zwischen Anschlussteil und Innenteil erforderlich wäre. Auf diese Weise ergibt sich zwischen dem Innenteil (auch als "Presshülse" bezeichnet) und dem Anschlussteil (Einschubteil) ein Leckpfad für die Prüfung der genannten stoffschlüssigen Verbindung (Laserschweißnaht), um insbesondere deren Dichtheit zu überprüfen. Dies ist beispielsweise für eine bevorzugte Verwendung der erfindungsgemäßen Schlauchbaugruppe als Teil einer Wasserleitung für Halbleitermaschinen vorteilhaft, bei welchen die Schlauchbaugruppe dazu dient, hochgradig sauberes Wasser zu leiten, während außerhalb ein Ultrahochvakuum ausgebildet ist.

Aufgrund der Tatsache, dass das Außenteil mit seinem umlaufenden Vorsprung endständig gegenüber dem Innenteil hervorsteht, lässt sich im Bereich dieses Vorsprungs das erwähnte zusätzliche, kundenseitige oder kundenspezifische Anschlussteil ansetzen und mit dem Außenteil im Bereich des Vorsprungs (von au-ßen) stoffschlüssig verbinden, wodurch keine stoffschlüssige Verbindung mehr zwischen dem Innenteil und dem Außenteil erforderlich ist, welche Teile ansonsten den aus der Stand der Technik bekannten ersten und zweiten Klemmbefestigungen entsprechen. Auf diese Weise kommt es zu keiner unmittelbaren thermischen Belastung des Innenschlauchs, wodurch kürzere Bauformen ermöglicht werden. Außerdem ist die vorstehend genannte Schweißverbindung zwischen dem Außenteil und dem kundenseitigen Anschlussteil grundsätzlich auf Dichtheit prüfbar, da sie nicht durch den Innenschlauch maskiert ist. Auf diese Weise überwindet die vorliegende Erfindung die aus dem Stand der Technik bekannten Nachteile.

"Kundenseitig" bedeutet in diesem Kontext, dass das genannte Anschlussteil an einem (freien) Ende so ausgestaltet ist oder sein kann, dass es mit weiteren, anwendungs- oder kundenspezifischen Leitungskomponenten kompatibel ist. Hier sind also vielfältige Ausgestaltungen möglich, worauf es vorliegend nicht weiter ankommt.

Eine äußerst bevorzugte Weiterbildung der erfindungsgemäßen Schlauchbaugruppe sieht vor, dass das Innenteil und das Außenteil ohne stoffschlüssige Verbindung gefügt sind. Hierdurch ergibt sich unmittelbar eine geringere thermische Belastung des Innenschlauchs, was insbesondere dann von großem Vorteil ist, wenn dieser aus einem Kunststoffmaterial hergestellt ist.

Eine andere Weiterbildung der erfindungsgemäßen Schlauchbaugruppe sieht vor, dass das Anschlussteil und das Innenteil einen gleichen, vorzugsweise konstanten, lichten Innendurchmesser aufweisen. Auf diese Weise ergibt sich eine glatte, verwirbelungsfreie Anbindung, was in vielen Anwendungsbereichen von Vorteil sein kann.

Noch eine andere Weiterbildung der erfindungsgemäßen Schlauchbaugruppe sieht vor, dass das Anschlussteil und das Innenteil an ihren einander zugewandten oder zuzuwendenden Enden jeweils einen radialen, umlaufenden Vorsprung bzw. eine entsprechende Verdickung aufweisen, vorzugsweise mit gleichen radialen Abmessungen. Auf diese Weise können das Anschlussteil und das Innenteil im Bereich der genannten Vorsprünge flächig miteinander in Anlage gebracht werden, was die Verbindungsqualität verbessern und die Stabilität der Schlauchbaugruppe erhöhen kann.

Noch eine andere Weiterbildung der erfindungsgemäßen Schlauchbaugruppe sieht vor, dass ein lichter Innendurchmesser des Außenteils im Bereich des Vorsprungs einem gleichen Außendurchmesser des Innenteils und des Anschlussteils entspricht, insbesondere im Bereich der vorstehend erwähnten Vorsprünge. Auf diese Weise ergibt sich in dem genannten Bereich eine Verbindungsmöglichkeit für die genannten Komponenten ohne Kavitäten, eingeschlossene Volumina oder Toträume, wodurch sich die Qualität und Stabilität der Verbindung verbessern lässt, insbesondere im Hinblick auf die genannten Vakuumanwendungen.

Es hat sich als äußerst vorteilhaft erwiesen, wenn im Rahmen einer anderen Weiterbildung der erfindungsgemäßen Schlauchbaugruppe das Anschlussteil und das Innenteil in dem verbundenen Zustand ohne stoffschlüssige Verbindung aneinander anliegen. Auf einen besonderen Vorteil einer solchen Ausgestaltung wurde bereits hingewiesen, weil auf diese Weise ein Leckpfad für die Prüfung der stoffschlüssigen Verbindung (Laserschweißnaht) zwischen Anschlussteil und Außenteil ausbildbar ist, sodass die Verbindungsqualität kontrollierbar ist.

Eine andere Weiterbildung der erfindungsgemäßen Schlauchbaugruppe sieht noch vor, dass eine axiale Erstreckung des Vorsprungs kleiner ist als eine axiale Erstreckung des radialen Vorsprungs bzw. der genannten Verdickung des Anschlussteils. Bei dem genannten Vorsprung handelt es sich um den eingangs erwähnten axialen Vorsprung des Außenteils gegenüber dem Innenteil. Auf diese Weise kann die bereits mehrfach erwähnte stoffschlüssige Verbindung (Laserschweißnaht) zwischen Außenteil und Anschlussteil in einem Bereich ausgebildet werden, in dem das Anschlussteil den genannten radialen Vorsprung aufweist, was aus Gründen der Verbindungsstabilität sowie auch der thermischen Belastung für weitere Bauteile von Vorteil ist.

Eine vorteilhafte andere Weiterbildung der erfindungsgemäßen Schlauchbaugruppe sieht noch vor, dass das Innenteil auf seiner in das freie Ende des Innenschlauchs eingeführten Seite eine Einführschräge aufweist. Auf diese Weise wird das Fügen der einzelnen Komponenten der Schlauchbaugruppe erleichtert, insbesondere das Klemmen von Innenschlauch zwischen Innenteil und Außenteil. Außerdem kann auf diese Weise für eine glatte, verwirbelungsfreie Anbindung des Innenschlauchs gesorgt werden.

Wieder eine andere Weiterbildung der erfindungsgemäßen Schlauchbaugruppe sieht vor, dass das Außenteil eine radial nach innen vorspringende, umlaufende Schulter aufweist, an der das Innenteil anliegt, vorzugsweise mit dem betreffenden radialen Vorsprung bzw. der genannten Verdickung. Auf diese Weise ergibt sich eine sichere, definierte Verbindung von Innenteil und Außenteil.

Weiterhin kann bei einer anderen Ausgestaltung der erfindungsgemäßen Schlauchbaugruppe vorgesehen sein, dass das Außenteil an seiner Außenumfangsfläche abschnittweise eine Sechskantkontur aufweist. Eine solche Sechskantkontur kann die Handhabung bzw. Montage der erfindungsgemäßen Schlauchbaugruppe erleichtern.

Noch eine andere Weiterbildung der erfindungsgemäßen Schlauchbaugruppe sieht vor, dass an beiden Enden des Innenschlauchs und des Außenschlauchs jeweils ein hülsenförmiges Innenteil und ein hülsenförmiges Außenteil angeordnet sind, die jeweils ausgebildet sind, wie weiter oben ausführlich beschrieben, und die klemmend mit dem Innenschlauch zusammenwirken. Mit anderen Worten: Es kann vorteilhaft sein, wenn die Schlauchbaugruppe an beiden Enden gleich bzw. symmetrisch ausgebildet ist und entsprechend auch an beiden Enden mit einem Anschlussteil versehen werden kann, wie weiter oben ausführlich beschrieben.

Nach Erkenntnissen der Anmelderin hat es sich außerdem als vorteilhaft erwiesen, wenn bei einer erfindungsgemäßen Schlauchbaugruppe, d.h. einer entsprechenden Weiterbildung derselben der Innenschlauch in einem Kunststoff ausgebildet ist, vorzugsweise in einem Kunststoffmaterial, das vakuumverträglich ist, zum Beispiel PTFE (Polytetrafluorethylen) und/oder PFA (Perfluoralkoxylalkan). Eine solche Ausgestaltung hat sich insbesondere für die bevorzugte Verwendung als Wasserleitung für Halbleitermaschinen als günstig erwiesen.

Bei entsprechender Weiterbildung der erfindungsgemäßen Schlauchbaugruppe kann außerdem vorgesehen sein, dass der Innenschlauch als Kunststoffauskleidung des Außenschlauchs ausgebildet ist, wobei der größte Teil der Länge des Innenschlauchs von dem Außenschlauch umschlossen ist. Solche Ausgestaltungen haben sich in der praktischen Verwendung als besonders vorteilhaft und günstig erwiesen.

Bei noch einer anderen Weiterbildung der erfindungsgemäßen Schlauchbaugruppe kann vorgesehen sein, dass der Außenschlauch eine Wandung aus einem starren Material, insbesondere einem metallischen Material, aufweist, wobei der Außenschlauch vorzugsweise als flexibler Metallschlauch ausgebildet ist. Auch eine solche Ausgestaltung hat sich nach den Erkenntnissen der Anmelderin als in der Praxis äußerst vorteilhaft erwiesen, insbesondere für die bereits erwähnten Vakuumanwendungen.

Als besonders vorteilhaft hat es sich auch erwiesen, wenn bei entsprechender Weiterbildung der erfindungsgemäßen Schlauchbaugruppe der Außenschlauch als Wellschlauch, insbesondere Ringwellschlauch, als Wickelschlauch oder aus mehreren Segmenten zusammengesetzt ausgebildet ist. Auf diese Weise lässt sich der weiter oben bereits erwähnte flexible Metallschlauch einfach und prozesssicher herstellen.

Als äußerst vorteilhaft hat es sich herausgestellt, wenn der Außenschlauch bei einer entsprechenden Weiterbildung der erfindungsgemäßen Schlauchbaugruppe ein Edelstahlschlauch ist. Dieser kann aufgrund seiner größeren Druckfestigkeit den Innenschlauch stützen.

Des Weiteren hat es sich als vorteilhaft herausgestellt, wenn bei einer entsprechenden Weiterbildung der erfindungsgemäßen Schlauchbaugruppe sowohl der Außenschlauch als auch der Innenschlauch vakuumdicht ausgebildet sind, vorzugsweise bis hin zu einer maximal zulässigen Leckage von insbesondere 1,00 E-9 mbar*l/s (Millibar mal Liter pro Sekunde).

Es wurde bereits mehrfach darauf hingewiesen, dass es besonders vorteilhaft ist, wenn bei einer entsprechenden Weiterbildung der erfindungsgemäßen Schlauchbaugruppe ein Leckpfad zwischen dem Innenteil und dem Anschlussteil vorhanden ist, weil hierdurch die Möglichkeit geschaffen wird, die vorhandene stoffschlüssige Verbindung (insbesondere Laserschweißnaht) zwischen dem Außenteil und dem Anschlussteil im Bereich des axialen Vorsprungs des Außenteils gegenüber dem Innenteil zu überprüfen, beispielsweise mittels eines Helium-Lecktests.

Im Rahmen der vorliegenden Erfindung bzw. der vorstehend beschriebenen vorteilhaften Weiterbildungen ist somit - anders als beim Stand der Technik - die "letzte" Schweißnaht der Schlauchbaugruppe prüfbar, da sie nicht durch den Innenschlauch (Kunststoffliner) maskiert ist.

Es besteht insbesondere die Möglichkeit, eine glatte, verwirbelungsfreie Anbindung des Liners (Innenschlauch) an einen Schlauchanschluss (Anschlussteil) zu schaffen. Dies kann einhergehen mit einer stoffschlüssigen, vakuumdichten Verbindung aller außenliegenden Komponenten zusammen mit einer vollständigen Prüfbarkeit auf Dichtheit, insbesondere bis hin zu Werten von 1,00 E-9 mbar*l/s, beispielsweise mittels Helium-Lecktest. Dabei bestehen vorteilhafterweise keinerlei Kavitäten, eingeschlossene Volumina oder Toträume, die sich insbesondere bei den genannten Vakuum-Anwendungen als nachteilig erweisen könnten.

Der bereits mehrfach erwähnte innenliegende Spalt zwischen Einschubteil (Anschlussteil) und Presshülse (Innenteil) stellt vorteilhafterweise einen Leckpfad für die Prüfung der genannten stoffschlüssigen Verbindung (Laserschweißnaht) dar.

Konstruktionsgemäß ergibt sich außerdem nur eine geringe thermische Belastung des Innenschlauchs (Liners) beim Schweißen, was insbesondere bei Innenschläuchen aus Kunststoff von Vorteil ist.

Die erfindungsgemäße Konstruktion geht einher mit einer guten Reinigbarkeit aller Einzelteile, verbunden mit einer partikel- und schmierstofffreien Montage.

Ein besonderes Merkmal der vorliegenden Erfindung - bei entsprechender Ausgestaltung - ist die Trennung zwischen dem innenliegenden Klemmelement für den Innenschlauch, das heißt dem Innenteil und dem kundenseitigen Anschluss (Anschlussteil bzw. Einschubteil), wobei vorteilhafterweise keine stoffschlüssige Verbindung zwischen den beiden Elementen (Innenteil und Außenteil) besteht, welche den Liner (Innenschlauch) verpressen.

Auf die erreichbaren bzw. erreichten technischen Vorteile wurde wiederholt hingewiesen: Dies sind in erster Linie der mögliche Leckpfad zwischen dem inneren Klemmpartner (Innenteil) und dem Kundenanschluss (Anschlussteil), wodurch die letzte Schweißnaht prüfbar wird, insbesondere mittels eines Helium-Lecktests. Außerdem besteht die Möglichkeit einer thermischen Trennung zwischen dem inneren Klemmpartner (Innenteil) und dem Anschlussteil, was zu einer geringeren thermischen Belastung des Innenschlauchs führt, was insbesondere bei einer Ausgestaltung des Innenschlauchs aus Kunststoff (Kunststoffliner) von Vorteil ist. Dadurch ergibt sich in vorteilhafter Weise eine mögliche kürzere Bauweise der Gesamtanordnung.

Weitere Eigenschaften und Vorteile der Erfindung ergeben sich aus der nachfolgenden Beschreibung von Ausführungsbeispielen anhand der Zeichnung.
- Figur 1: zeigt eine Ausgestaltung der erfindungsgemäßen Schlauchbaugruppe, teilweise im Längsschnitt;
- Figur 2: zeigt die Ausgestaltung gemäß Figur 1 vollständig im Längsschnitt; und
- Figur 3: zeigt eine Außenansicht der Ausgestaltung gemäß den Figuren 1 und 2.

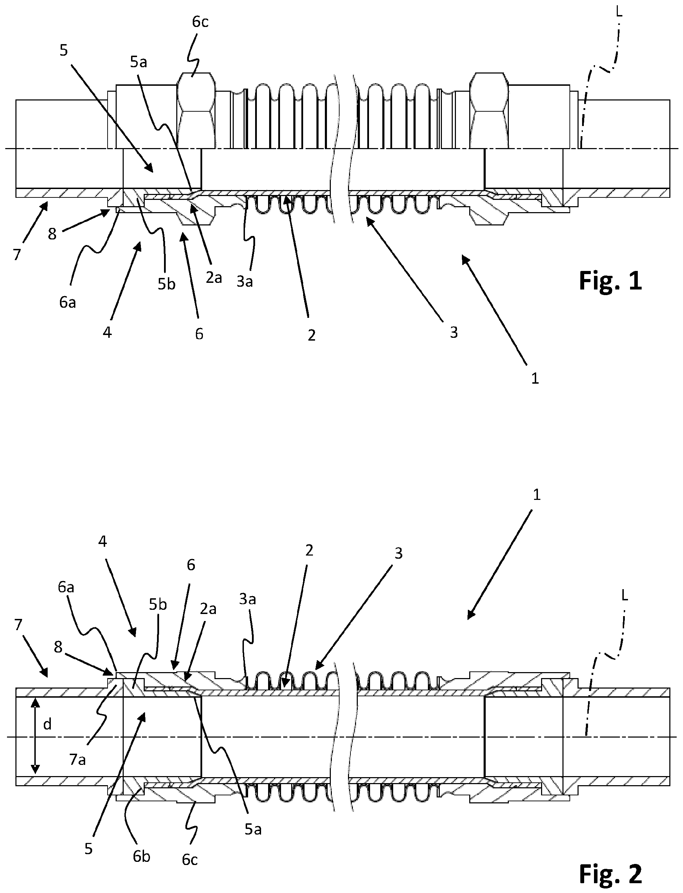

Figur 1 zeigt, teilweise im Längsschnitt (Längsachse L), eine Ausgestaltung der erfindungsgemäßen Schlauchbaugruppe, die insgesamt mit dem Bezugszeichen 1 bezeichnet ist. Die Schlauchbaugruppe 1 ist an ihren beiden Enden identisch ausgebildet, sodass vorliegend zwecks Vereinfachung nur eine Seite der Schlauchbaugruppe 1 explizit beschrieben wird. Diese Beschreibung gilt auch für die andere Seite der Schlauchbaugruppe 1 entsprechend.

Des Weiteren entsprechen in allen Figuren gleiche Bezugszeichen gleichen oder zumindest gleichwirkenden Elementen, sodass vorliegend nicht auf alle Figuren gesondert einzugehen ist.

Die Schlauchbaugruppe 1 umfasst einen Innenschlauch 2, der vorliegend als Kunststoffliner aus PTFE oder PFA ausgebildet ist, wobei die Erfindung allerdings keinesfalls auf die genannten Materialien beschränkt ist. Der Innenschlauch 2 ist über einen großen Teil seiner Länge innerhalb eines Außenschlauchs 3 angeordnet, der entsprechend den Innenschlauch 2 abschnittsweise umgibt. Dabei ragt ein freies Ende 2a des Innenschlauchs 2 aus dem Außenschlauch 3 heraus. Der Außenschlauch 2 ist vorliegend als Ringwellschlauch aus einem metallischen Material ausgebildet, vorzugsweise aus Edelstahl. Auch hier ist die Erfindung keinesfalls auf die genannte Materialwahl beschränkt.

Außerdem umfasst die Schlauchbaugruppe eine Verbindungsanordnung 4, die wenigstens ein hülsenförmiges Innenteil 5 (Presshülse) und ein hülsenförmiges Au-ßenteil 6 (der sog. "Schlauchadapter") umfasst. Das Innenteil 5 ist an das freie Ende 2a des Innenschlauchs 2 eingeführt und weist in diesem Bereich eine Einlaufschräge 5a auf. An seinem anderen Ende besitzt das Innenteil 5 eine radiale Verdickung bzw. einen radialen Vorsprung 5b. Das Außenteil 6 umgibt das Innenteil 5 und ist mit dem Außenschlauch 3 bei Bezugszeichen 3a fluiddicht stoffschlüssig verbunden, vorzugsweiseverschweißt. Das genannte freie Ende 2a des Innenschlauchs 2 ist zwischen dem Innenteil 5 und dem Außenteil 6 geklemmt (verpresst). Das Außenteil 6 weist einen umlaufenden Vorsprung 6a an seinem freien Ende, das heißt an seinem von dem Außenschlauch 3 abgewandten Ende, auf, welcher Vorsprung 6a axial gegenüber dem Innenteil 5 hervorsteht. Bei Bezugszeichen 6b (vgl. Figur 2) weist das Außenteil 6 eine innenliegende, umlaufende Schulter auf, an der das Innenteil 5 mit der genannten radialen Verdickung 5b anliegt.

In axialer Richtung an das Innenteil 5 angrenzend ist ein (kunden- oder anwendungsspezifisches) Anschlussteil 7 (Einschubteil) angeordnet, welches an seinem dem Innenteil 5 zugewandten Ende ebenfalls eine radiale Verdickung (radialer Vorsprung) 7a aufweist, dessen Abmessungen in radialer Richtung dem Vorsprung 5b des Innenteils 5 entsprechen, sodass sich in diesem Bereich eine großflächige Anlage von Innenteil 5 und Anschlussteil 7 ergibt. Dabei entspricht ein lichter Innendurchmesser des Innenteils einem lichten Innendurchmesser d des Anschlussteils 7, sodass sich in diesem Bereich eine durchgängige, glattwandige Rohrleitung ergibt. Das Außenteil 6 und das Anschlussteil 7 sind bei Bezugszeichen 8 mittels einer (nicht dargestellten) umlaufenden (Laser-)Schweißnaht stoffschlüssig verbunden, während zwischen dem Innenteil 5 und dem Außenteil 6 einerseits sowie zwischen dem Innenteil 5 und dem Anschlussteil 7 andererseits keinerlei stoffschlüssige Verbindungen vorgesehen sind. Der Innenschlauch 2 ist mit seinem freien Ende 2a zwischen dem Innenteil 5 und dem Außenteil 6 klemmend gehalten, worauf bereits hingewiesen wurde. Weil insbesondere zwischen dem Innenteil 5 und dem Anschlussteil 7 keinerlei stoffschlüssige Verbindung ausgebildet ist, ergibt sich auf diese Weise ein Leckpfad von innen bis in den Bereich der Schweißverbindung bei Bezugszeichen 8, sodass diese in einfacher Weise auf ihre Dichtheit überprüfbar ist.

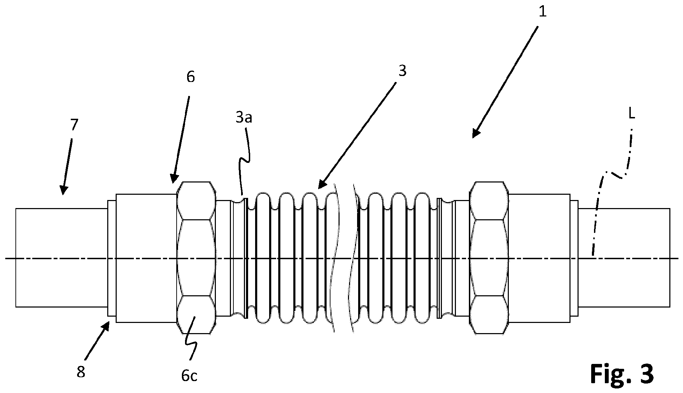

Wie sich insbesondere aus Figur 1 ergibt, weist das Außenteil 6 bei Bezugszeichen 6c außen eine Sechskantkontur auf, auf die mit entsprechenden Werkzeugen eingewirkt werden kann, was die Handhabung erleichtert. Diese Sechskantkontur bei Bezugszeichen 6c ist auch in Figur 3 gut erkennbar.

Wie man den Figuren noch entnimmt, entspricht ein lichter Innendurchmesser des Außenteils 6 im Bereich des Vorsprungs 6a einem gleichen Außendurchmesser des Innenteils 5 und des Anschlussteils 7, insbesondere im Bereich der genannten radialen Vorsprünge 5b bzw. 7a, was in den Figuren aus Gründen der Übersichtlichkeit nicht weiter bezeichnet ist.

Dargestellt ist in den Figuren der im einleitenden Teil der Beschreibung erwähnte verbundene Zustand, in dem das Anschlussteil 7 und das Innenteil 5 ohne stoffschlüssige Verbindung aneinander anliegen, wie erwähnt.

Wie man den Figuren noch entnimmt, ist eine axiale Erstreckung des Vorsprungs 6a des Außenteils 6 kleiner als eine axiale Erstreckung des radialen Vorsprungs 7a des Anschlussteils, sodass sich in diesem Bereich eine äußere Stufe ergibt, in der die bereits erwähnte Schweißnaht bei Bezugszeichen 8 angeordnet sein kann.

Bei der gezeigten Schlauchbaugruppe 1 fungiert der Innenschlauch 2 als Kunststoffauskleidung des Außenschlauchs 3, wobei ein beträchtlicher Teil der Länge des Innenschlauchs 2 von dem Außenschlauch 3 umschlossen ist. Umgekehrt fungiert der Außenschlauch 3 aufgrund seiner inhärent höheren Druckfestigkeit als Stützelement für den Innenschlauch 2.

Vorteilhafterweise sind bei der dargestellten Ausführungsform sowohl der Außenschlauch 3 als auch der Innenschlauch 2 vakuumdicht ausgeführt, vorzugsweise bis zu einer maximal zulässigen Leckage von 1,00 E-9 mbar*l/s.

Der bereits wiederholt angesprochene Leckpfad ist gebildet zwischen dem Innenteil 5 und dem Anschlussteil 7 entlang der dort gezeigten Trennlinie bis in den Bereich der äußeren, "letzten" Schweißnaht bei Bezugszeichen 8. Diese ist entsprechend nicht durch den Innenschlauch 2, der zwischen Innenteil 5 und Außenteil 6 geklemmt (verpresst) ist, maskiert und kann deshalb in der bereits angesprochenen Art und Weise auf Dichtheit überprüft werden. Da sich zudem die genannte Schweißverbindung bei Bezugszeichen 8 in größerer Entfernung von dem Innenschlauch 2 befindet, ist dieser wirksam vor thermischer Beschädigung geschützt, was die Sicherheit und Qualität der gesamten Schlauchbaugruppe 1 günstig beeinflusst.

Die Erfindung ist keinesfalls auf die in den Figuren gezeigte beidseitig-symmetrische Ausgestaltung beschränkt, sondern umfasst selbstverständlich auch Schlauchbaugruppen, bei denen die beschriebene Verbindungsanordnung 4 nur auf einer Seite vorhanden ist.

Das Anschlussteil 7 dient mit seinem freien Ende zur Anbindung an kundenspezifische weitere Rohrleitungs- bzw. Schlauchleitungselemente und kann in diesem Bereich den jeweiligen Anforderungen entsprechend flexibel ausgestaltet sein, worauf vorliegend nicht weiter einzugehen ist.

Zur Herstellung der erfindungsgemäßen Schlauchbaugruppe wird zunächst der Außenschlauch 3 bei Bezugszeichen 3a stoffschlüssig mit dem Außenteil 6 bzw. den Außenteilen 6 verbunden (verschweißt) und mit dem Innenschlauch 2 ausgekleidet, oder umgekehrt. Anschließend wird das Innenteil 5 bzw. werden die Innenteile 5 mit der Einlaufschräge 5a voran in das Außenteil 6 bzw. die Außenteile 6 und den Innenschlauch 2 eingeführt, sodass der Innenschlauch 2, wie dargestellt, zwischen Innenteil 5 und Außenteil 6 eingeklemmt wird, bis das Innenteil 5 mit seiner Verdickung 5b an der Schulter 6b (vgl. Figur 2) des Außenteils 6 anliegt. Anschließend wird das Anschlussteil 7 bzw. werden die Anschlussteile 7 endständig angesetzt, wie gezeigt, und danach bei Bezugszeichen 8 mittels einer umlaufenden (Laser-)Schweißnaht mit dem jeweiligen Außenteil 6 stoffschlüssig verbunden. Anschließend kann ein Helium-Lecktest durchgeführt werden, um zu überprüfen, ob die Verbindung bei Bezugszeichen 8 hinreichend dicht ausgeführt ist. Insbesondere eine solche Dichtheitsprüfung war nach dem Stand der Technik nicht möglich.

## Patentansprüche

1. Schlauchbaugruppe (1), umfassend:
einen Innenschlauch (2);
einen Außenschlauch (3), der den Innenschlauch (2) abschnittweise umgibt, sodass wenigstens ein freies Ende (2a) des Innenschlauchs (2) aus dem Außenschlauch (3) herausragt; und
eine Verbindungsanordnung (4) mit:
wenigstens einem hülsenförmigen Innenteil (5), welches Innenteil (5) in das freie Ende (2a) des Innenschlauchs (2) eingeführt ist; und
wenigstens einem hülsenförmigen Außenteil (6), welches das Innenteil (5) umgibt und mit dem Außenschlauch (3) fluiddicht verbunden ist, vorzugsweise stoffschlüssig, höchst vorzugsweise verschweißt;
bei der das freie Ende (2a) des Innenschlauchs (2) zwischen dem Innenteil (5) und dem Außenteil (6) geklemmt ist und bei der das Außenteil (6) mit einem umlaufenden Vorsprung (6a) endständig gegenüber dem Innenteil (5) hervorsteht;
**gekennzeichnet durch**
ein zusätzliches Anschlussteil (7), das sich in einem verbundenen Zustand axial an das Innenteil (5) anschließt, bei der das Außenteil (6) in dem verbundenen Zustand mit seinem umlaufenden Vorsprung (6a) das Anschlussteil (7) in einem Abschnitt umgibt, wobei das Anschlussteil (7) und das Außenteil (6) im Bereich des Vorsprungs (6a) fluiddicht stoffschlüssig verbunden sind.

2. Schlauchbaugruppe (1) nach Anspruch 1, bei der
das Innenteil (5) und das Außenteil (6) ohne stoffschlüssige Verbindung gefügt sind.

3. Schlauchbaugruppe (1) nach Anspruch 1 oder 2, bei der
das Anschlussteil (7) und das Innenteil (5) einen gleichen, vorzugsweise konstanten, lichten Innendurchmesser (d) aufweisen, und/oder bei der das Anschlussteil (7) und das Innenteil (5) an ihren einander zugewandten oder zuzuwendenden Enden jeweils einen radialen, umlaufenden Vorsprung (5b, 7a) aufweisen, vorzugsweise mit gleichen radialen Abmessungen.

4. Schlauchbaugruppe (1) nach einem der Ansprüche 1 bis 3, bei der
ein lichter Innendurchmesser des Außenteils (6) im Bereich des Vorsprungs (6a) einem gleichen Außendurchmesser des Innenteils (5) und des Anschlussteils (7) entspricht, insbesondere im Bereich der radialen Vorsprünge (5b, 7a) gemäß Anspruch 4.

5. Schlauchbaugruppe (1) nach einem der Ansprüche 1 bis 4, bei der
das Anschlussteil (7) und das Innenteil (5) in dem verbundenen Zustand ohne stoffschlüssige Verbindung aneinander anliegen.

6. Schlauchbaugruppe (1) nach einem der Ansprüche 1 bis 5, bei der
eine axiale Erstreckung des Vorsprungs (6a) kleiner ist als eine axiale Erstreckung des radialen Vorsprungs (7a) des Anschlussteils (7).

7. Schlauchbaugruppe (1) nach einem der Ansprüche 1 bis 6, bei der
das Innenteil (5) auf seiner in das freie Ende (2a) des Innenschlauchs (2) eingeführten Seite eine Einführschräge (5a) aufweist.

8. Schlauchbaugruppe (1) nach einem der Ansprüche 1 bis 7, bei der
das Außenteil (6) eine radial nach innen vorspringende, umlaufende Schulter (6b) aufweist, an der das Innenteil (5) anliegt, vorzugsweise mit dem betreffenden Vorsprung (5b) gemäß Anspruch 3.

9. Schlauchbaugruppe (1) nach einem der Ansprüche 1 bis 10, bei der
das Außenteil (6) an seiner Außenumfangsfläche abschnittweise eine Sechskantkontur (6c) aufweist.

10. Schlauchbaugruppe (1) nach einem der Ansprüche 1 bis 9, bei der
an beiden Enden des Innenschlauchs (2) und des Außenschlauchs (3) jeweils ein hülsenförmiges Innenteil (5) und ein hülsenförmiges Außenteil (6) angeordnet sind, die gemäß Anspruch 1 ausgebildet sind und klemmend mit dem Innenschlauch (2) zusammenwirken.

11. Schlauchbaugruppe (1) nach einem der Ansprüche 1 bis 10, bei der
der Innenschlauch (2) in einem Kunststoff ausgebildet ist, vorzugsweise in einem Kunststoffmaterial, das vakuumverträglich ist, z.B. PTFE (Polytetrafluorethylen) und/oder PFA (Perfluoralkoxylalkan), und/oder bei der der Innenschlauch (2) als Kunststoffauskleidung des Außenschlauchs (3) ausgebildet ist, wobei vorzugsweise ein größter Teil der Länge des Innenschlauchs (2) von dem Außenschlauch (3) umschlossen ist.

12. Schlauchbaugruppe (1) nach einem der Ansprüche 1 bis 11, bei der
der Außenschlauch (3) eine Wandung aus einem starren Material, insbesondere einem metallischen Material, aufweist, wobei der Außenschlauch (3) vorzugsweise als flexibler Metallschlauch ausgebildet ist, und/oder bei der der Außenschlauch (3) als Wellschlauch, insbesondere Ringwellschlauch, als Wickelschlauch oder aus mehreren Segmenten zusammengesetzt ausgebildet ist, und/oder bei der der Außenschlauch (3) ein Edelstahlschlauch ist, der vorzugsweise aufgrund seiner höheren Druckbeständigkeit den Innenschlauch (2) stützt.

13. Schlauchbaugruppe (1) nach einem der Ansprüche 1 bis 12, bei der
sowohl der Außenschlauch (3) als auch der Innenschlauch (2) vakuumdicht, vorzugsweise bis 1,00E-9 mbar*l/s, ausgebildet sind.

14. Schlauchbaugruppe (1) nach einem der Ansprüche 1 bis 13, bei der
ein Leckpfad zwischen dem Innenteil (5) und dem Anschlussteil (7) vorhanden ist.

## Claims

1. Hose assembly (1) comprising:
an inner hose (2);
an outer hose (3) that partially surrounds the inner hose (2), such that at least one free end (2a) of the inner hose (2) protrudes out of the outer hose (3); and
a connection assembly (4) with:
at least one sleeve-shaped inner part (5), which inner part (5) is inserted into the free end (2a) of the inner hose (2); and
at least one sleeve-shaped outer part (6) which surrounds the inner part (5) and is connected to the outer hose (3) in a fluid-tight manner, preferably in an integral manner, most preferably welded;
wherein the free end (2a) of the inner hose (2) is clamped between the inner part (5) and the outer part (6) and wherein the outer part (6) projects with a circumferential projection (6a) at the end with respect to the inner part (5);
**characterised by**
an additional connecting part (7) which, in a connected state, is axially connected to the inner part (5), wherein the outer part (6), in the connected state, surrounds the connecting part (7) in a portion with its circumferential projection (6a), wherein the connecting part (7) and the outer part (6) are connected in a fluid-tight and integral manner in the region of the projection (6a).

2. Hose assembly (1) according to claim 1, wherein
the inner part (5) and the outer part (6) are joined without being integrally bonded.

3. Hose assembly (1) according to claim 1 or 2, wherein
the connecting part (7) and the inner part (5) have an identical, preferably constant, clear inner diameter (d), and/or wherein the connecting part (7) and the inner part (5) each have a radial, circumferential projection (5b, 7a) at their ends facing or to be facing one another, preferably with identical radial dimensions.

4. Hose assembly (1) according to any one of claims 1 to 3, wherein
a clear inner diameter of the outer part (6) in the region of the projection (6a) corresponds to an identical outer diameter of the inner part (5) and of the connecting part (7), in particular in the region of the radial projections (5b, 7a) in accordance with claim 4.

5. Hose assembly (1) according to any one of claims 1 to 4, wherein
the connecting part (7) and the inner part (5) abut against each other in the connected state without being integrally bonded.

6. Hose assembly (1) according to any one of claims 1 to 5, wherein
an axial extension of the projection (6a) is smaller than an axial extension of the radial projection (7a) of the connecting part (7).

7. Hose assembly (1) according to any one of claims 1 to 6, wherein
the inner part (5) has an insertion bevel (5a) on its side inserted into the free end (2a) of the inner hose (2).

8. Hose assembly (1) according to any one of claims 1 to 7, wherein
the outer part (6) has a radially inwardly projecting circumferential shoulder (6b) against which the inner part (5) abuts, preferably with the relevant projection (5b) in accordance with claim 3.

9. Hose assembly (1) according to any one of claims 1 to 10, wherein
the outer part (6) has a hexagonal contour (6c) in sections of its outer circumferential surface.

10. Hose assembly (1) according to any one of claims 1 to 9, wherein
a sleeve-shaped inner part (5) and a sleeve-shaped outer part (6) are respectively arranged at both ends of the inner hose (2) and the outer hose (3), and are formed in accordance with claim 1 and interact in a clamping manner with the inner hose (2).

11. Hose assembly (1) according to any one of claims 1 to 10, wherein
the inner hose (2) is formed in a plastic, preferably in a plastic material that is vacuum-compatible, e.g. PTFE (polytetrafluoroethylene) and/or PFA (perfluoroalkoxyalkane), and /or wherein the inner hose (2) is formed as a plastic lining of the outer hose (3), wherein preferably a major part of the length of the inner hose (2) is surrounded by the outer hose (3).

12. Hose assembly (1) according to any one of claims 1 to 11, wherein
the outer hose (3) has a wall made of a rigid material, in particular a metallic material, wherein the outer hose (3) is preferably formed as a flexible metal hose, and/or wherein the outer hose (3) is formed as a corrugated hose, in particular a hose with annular corrugations, a wound hose or a hose composed of multiple segments, and/or wherein the outer hose (3) is a stainless steel hose which preferably supports the inner hose (2) by virtue of its higher pressure resistance.

13. Hose assembly (1) according to any one of claims 1 to 12, wherein
both the outer hose (3) and the inner hose (2) are formed vacuum-tight, preferably up to 1.00 E-9 mbar*l/s.

14. Hose assembly (1) according to any one of claims 1 to 13, wherein
there is a leakage path between the inner part (5) and the connecting part (7).

## Revendications

1. Ensemble de tuyaux (1), comprenant :
un tuyau intérieur (2) ;
un tuyau extérieur (3) qui entoure le tuyau intérieur (2) par sections, de sorte qu'au moins une extrémité libre (2a) du tuyau intérieur (2) fait saillie hors du tuyau extérieur (3) ; et
un agencement de connexion (4) avec :
au moins une partie intérieure (5) en forme de douille, laquelle partie intérieure (5) est introduite dans l'extrémité libre (2a) du tuyau intérieur (2) ; et
au moins une partie extérieure (6) en forme de douille, laquelle entoure la partie intérieure (5) et est connectée au tuyau extérieur (3) de manière étanche aux fluides, de préférence par accouplement de matière, le plus préférablement soudée ;
dans lequel l'extrémité libre (2a) du tuyau intérieur (2) est serrée entre la partie intérieure (5) et la partie extérieure (6) et dans lequel la partie extérieure (6) fait saillie à l'extrémité par rapport à la partie intérieure (5) avec une saillie périphérique (6a) ;
**caractérisé par**
une partie de raccordement supplémentaire (7) qui, dans un état connecté, se raccorde axialement à la partie intérieure (5), dans laquelle la partie extérieure (6), dans l'état connecté, entoure la partie de raccordement (7) dans une section avec sa saillie périphérique (6a), dans lequel la partie de raccordement (7) et la partie extérieure (6) sont connectées par accouplement de matière étanche aux fluides au niveau de la saillie (6a).

2. Ensemble de tuyaux (1) selon la revendication 1, dans lequel
la partie intérieure (5) et la partie extérieure (6) sont jointes sans connexion partie intérieure.

3. Ensemble de tuyaux (1) selon la revendication 1 ou 2, dans lequel
la partie de raccordement (7) et la partie intérieure (5) présentent un diamètre intérieur libre (d) identique, de préférence constant, et/ou dans lequel la partie de raccordement (7) et la partie intérieure (5) présentent respectivement une saillie périphérique radiale (5b, 7a) à leurs extrémités tournées l'une vers l'autre ou à leurs extrémités tournées vers l'une d'elles, de préférence avec des dimensions radiales identiques.

4. Ensemble de tuyaux (1) selon l'une quelconque des revendications 1 à 3, dans lequel
un diamètre intérieur libre de la partie extérieure (6) au niveau de la saillie (6a) correspond à un diamètre extérieur identique de la partie intérieure (5) et de la partie de raccordement (7), en particulier au niveau des saillies radiales (5b, 7a) selon la revendication 4.

5. Ensemble de tuyaux (1) selon l'une quelconque des revendications 1 à 4, dans lequel
la partie de raccordement (7) et la partie intérieure (5) sont en contact l'une avec l'autre dans l'état connecté sans accouplement de matière.

6. Ensemble de tuyaux (1) selon l'une quelconque des revendications 1 à 5, dans lequel
une extension axiale de la saillie (6a) est inférieure à une extension axiale de la saillie radiale (7a) de la partie de raccordement (7).

7. Ensemble de tuyaux (1) selon l'une quelconque des revendications 1 à 6, dans lequel
la partie intérieure (5) présente une pente d'introduction (5a) sur son côté introduit dans l'extrémité libre (2a) du tuyau intérieur (2).

8. Ensemble de tuyaux (1) selon l'une quelconque des revendications 1 à 7, dans lequel
la partie extérieure (6) présente un épaulement périphérique (6b) en saillie radiale vers l'intérieur, contre lequel la partie intérieure (5) repose, de préférence avec la saillie (5b) concernée selon la revendication 3.

9. Ensemble de tuyaux (1) selon l'une quelconque des revendications 1 à 10, dans lequel
la partie extérieure (6) présente, par sections sur sa surface périphérique extérieure, un contour hexagonal (6c).

10. Ensemble de tuyaux (1) selon l'une quelconque des revendications 1 à 9, dans lequel
aux deux extrémités du tuyau intérieur (2) et du tuyau extérieur (3) sont disposées respectivement une partie intérieure (5) en forme de douille et une partie extérieure (6) en forme de douille, qui sont conçues selon la revendication 1 et coopèrent par serrage avec le tuyau intérieur (2).

11. Ensemble de tuyaux (1) selon l'une quelconque des revendications 1 à 10, dans lequel
le tuyau intérieur (2) est conçu avec une matière plastique, de préférence avec une matière plastique qui est compatible avec le vide, par ex. du PTFE (polytétrafluoroéthylène) et/ou du PFA (perfluoroalcoxylalcane), et/ou dans lequel le tuyau intérieur (2) est conçu en tant qu'habillage plastique du tuyau extérieur (3), dans lequel de préférence une majeure partie de la longueur du tuyau intérieur (2) est entourée par le tuyau extérieur (3).

12. Ensemble de tuyaux (1) selon l'une quelconque des revendications 1 à 11, dans lequel
le tuyau extérieur (3) présente une paroi en un matériau rigide, en particulier un matériau métallique, dans lequel le tuyau extérieur (3) est de préférence conçu en tant que tuyau métallique flexible, et/ou dans lequel le tuyau extérieur (3) est conçu en tant que tuyau ondulé, en particulier tuyau ondulé annulaire, en tant que tuyau enroulé ou composé de plusieurs segments, et/ou dans lequel le tuyau extérieur (3) est un tuyau en acier inoxydable, qui soutient de préférence le tuyau intérieur (2) en raison de sa plus haute résistance à la pression.

13. Ensemble de tuyaux (1) selon l'une quelconque des revendications 1 à 12, dans lequel
aussi bien le tuyau extérieur (3) que le tuyau intérieur (2) sont étanches au vide, de préférence jusqu'à 1,00E-9 mbar*I/s.

14. Ensemble de tuyaux (1) selon l'une quelconque des revendications 1 à 13, dans lequel
un chemin de fuite est présent entre la partie intérieure (5) et la partie de raccordement (7).
